# EUROPEAN PATENT SPECIFICATION

(11) **EP 2 962 918 B1**
(45) Date of publication and mention of the grant of the patent: **25.01.2017**
(21) Application number: 15175337.3
(22) Date of filing: 03.07.2015
(51) Int. Cl.: B62H 5/14

(54) **RING LOCK AND A METHOD FOR ASSEMBLING SUCH RING LOCK**
RINGSCHLOSS UND EIN VERFAHREN ZUR MONTAGE EINES SOLCHEN RINGSCHLOSSES
ANTIVOL EN FORM DE ANNEAU ET UN PROCÉDURE D'ASSEMBLAGE

(30) Priority: 04.07.2014 NL 2013131
(43) Date of publication of application: 06.01.2016
(73) Proprietor: AXA Stenman Nederland B.V., 3903 AV Veenendaal (NL)
(72) Inventor: Mendivelso, Elmer Curcho, 3903 AV Veenendaal (NL); Stunnebrink, Marco Dimphina Henricus, 3903 AV Veenendaal (NL)
(74) Representative: V.O.

(56) References cited:
- DE-A1-102012 102 896
- DE-U1- 7 834 352
- DE-U1- 8 004 739
- DE-U1- 8 716 271
- DE-U1-202009 002 004
- DE-U1-202014 006 369
- NL-A- 2 003 230
- NL-A- 8 300 938

## Description

### FIELD

The invention relates to a ring lock which can be applied to a cycle, such as a bicycle, an electric bicycle, a moped, a go-cart or like vehicles. The invention also relates to a method for assembling such a ring lock.

### BACKGROUND

A ring lock is known from *inter alia* the Dutch patent NL 1.028.885 and NL8300938. NL8300938 is considered the closest prior art and discloses all of the features of the preamble of claim 1. This prior art discloses a bicycle lock provided with a lock housing, a lock mechanism included in the lock housing, and a ring bolt having a substantially circular segment-shaped configuration. The ring bolt can be brought in a closed position and an opened position, and in the closed position is locked by the lock mechanism and through operation of the lock mechanism can be released to be brought in the opened position.

The known ring lock is assembled by the 'stacking method' known to the skilled person. In this method, the lock housing with the lock mechanism contained therein is placed in a lock rear cover. Thereupon, from the same direction the ring bolt is placed in the lock housing. After that, from the same direction a lock front cover is placed on the lock rear cover, thereby confining the lock housing. Next, the whole is joined together by rivets or bolt/nut assemblies. A lock thus stacked together, when sabotaged, for instance when the rivets or bolt/nut assemblies are broken, can also be unstacked again and thus be taken apart. This renders the known lock susceptible to sabotage. An advantage of the known lock is that it is relatively simple to assemble.

### SUMMARY OF THE INVENTION

The invention contemplates a ring lock that has the advantages of the known lock and that resolves, at least partly, the disadvantages thereof. More particularly, the invention contemplates a ring lock that is cheaper and easier to manufacture and that offers a still better protection from sabotage of the lock.

To this end, the invention provides a ring lock which comprises at least:
- a lock housing;
- a lock mechanism which is included in the lock housing;
- a ring bolt having a substantially circular segment-shaped configuration, while the ring bolt is bringable in a closed position and an opened position and in the closed position is locked by the lock mechanism and through operation of the lock mechanism is released to be brought in the opened position;
   wherein the ring lock is characterized in that the lock housing comprises a single casting with a ring bolt channel which extends along a circular segment-shaped axis, the ring bolt channel being bounded by ring bolt channel walls which form an integral part of the casting and which enclose the ring bolt which is in the ring bolt channel, such that the ring bolt is removable from the ring bolt channel and placeable therein solely in the direction of the circular segment-shaped axis.

The ring lock according to the invention has several advantages. Firstly, the costs of manufacturing a lock housing in a one-piece casting are lower than the manufacturing costs of the lock housing of the prior art ring lock. With the lock housing of the ring lock according to the invention, all the necessary form features are realized straightaway in the single casting operation. The ring bolt channel walls enclosing the ring bolt channel lead to enhanced sabotage resistance, since the ring bolt can be fitted in the ring bolt channel in one way only, viz., solely by passing the ring bolt along the circular segment-shaped axis of the ring bolt channel into the ring bolt channel. For a saboteur of the lock to break the connection between the lock housing and the ring bolt in a different manner, he will have to drill away or otherwise remove all ring bolt channel walls. This is a job so time consuming that the average saboteur will refrain from it. Still, the ring lock is so arranged that the parts of the ring lock can nonetheless be assembled in a simple manner, though with a different method than the known, above-described stacking method. Despite this relatively simple assembly, the lock, in the event of sabotage, cannot be simply unstacked to undo the locking action of the ring lock. This is because the circular segment-shaped ring bolt can be moved out of the lock housing only along the circular segment-shaped axis and this, of course, can only be done after unlocking of the lock mechanism. So, even if a lock front cover or a lock rear cover were removed by sabotage, the ring bolt still cannot be removed to eliminate the locking action of the ring lock.

In an embodiment of the ring lock, the lock housing is cast from a metal or an alloy intended for casting.

A lock housing made from metal or such an alloy intended for casting is strong and provides a lock housing that is well resistant to sabotage with screw drivers, hammers, drills, and like sabotage tools. Moreover, metal, or the alloy intended for casting, flows eminently during casting, thus affording large freedom in shape. Casting can be, for example, high pressure die casting or injection molding.

In an embodiment of the ring lock, the lock mechanism can comprise at least the following parts:
- a lock cylinder which is received in a lock cylinder opening of the lock housing and which extends in the direction of a lock cylinder axis;
- an eccentric cam which is disposed eccentrically with respect to the lock cylinder axis and is connected with the lock cylinder;
- a locking plate which is included movably in the lock housing and is in engagement with the eccentric cam, while the locking plate in a closed condition of the ring bolt engages a notch provided in the ring bolt and through rotation of the lock cylinder and the eccentric cam connected therewith is bringable, against spring action, into an unlocking position in which it has been brought out of engagement with the notch;
   wherein the ring lock further comprises:
   - a locking plate receiving cavity which is formed in the lock housing and which is provided with a locking plate receiving cavity supply opening, while the locking plate in an assembled condition of the ring lock is received in the locking plate receiving cavity, and during assembly the locking plate is bringable via the locking plate receiving cavity supply opening into the locking plate receiving cavity; and
   - a covering cap which has a substantially U-shaped configuration with a covering cap body and two covering cap legs extending from the covering cap body on opposite sides of the lock housing, the covering cap covering the locking plate receiving cavity supply opening, such that the locking plate is confined in the locking plate receiving cavity.

The advantage of this embodiment over the prior art ring lock is that the lock housing is provided with a covering cap with which the locking plate is confined in the locking plate receiving cavity. After placement of the locking plate in the locking plate receiving cavity, the only assembly operation that is necessary to keep the locking plate in place in the locking plate receiving cavity is placing the covering cap on the lock housing. Unauthorized access to the locking plate, e.g., by a saboteur who is seeking to break the lock open, is made considerably more difficult by the confinement of the locking plate behind the covering cap.

In a further elaboration of this embodiment, the covering cap is made from hardened metal, such as hardened steel or a hard alloy. By manufacturing the covering cap from such a metal, an improved lock-breaking security against sawing and/or drilling is realized. This makes removal of the locking plate more difficult, thereby making the unauthorized opening of the ring lock more difficult.

In a further embodiment, the lock cylinder may be provided with a circumferential groove near the connection between the lock cylinder and the eccentric cam, so that at the circumferential groove a first break protection is provided. This first break protection breaks upon the exertion of an axial force above a particular threshold value. The forcing and hence unauthorized opening of the ring lock, for instance by bashing in the lock cylinder, is thereby made more difficult. This is due to the fact that the lock cylinder, after breaking of the break protection, is not connected with the eccentric cam anymore, so that rotation of the lock cylinder does not lead to rotation of the eccentric cam. As a result of the eccentric cam not rotating anymore, the locking plate will remain in place and remain in engagement with the ring bolt, so that the ring bolt cannot be brought in the opened position.

Also provided is an embodiment of the ring lock whereby the lock housing is provided with a recess which extends into the lock cylinder opening. In this embodiment, the covering cap is provided with a blocking flange, which extends substantially in a plane perpendicular to the lock cylinder axis. In an assembled condition of the ring lock, the blocking flange extends through the recess in the lock housing into the lock cylinder opening and the circumferential groove in the lock cylinder. The lock cylinder is thereby confined in axial direction by the blocking flange. Forcing the lock by driving an elongate object into the lock cylinder and then pulling it out of the lock housing is made virtually impossible by the blocking flange. Thus, an improved sabotage security is realized. This improved sabotage security is obtained without extra parts being necessary and also without this leading to extra assembly operations for placing such extra parts. With the placement of the covering cap, not only the locking plate is confined, but at the same time the lock cylinder is secured from being pulled out.

In an embodiment, a blocking recess is provided, which is integrally included in the lock housing. The blocking recess is arranged such that the eccentric cam extends into the blocking recess when the lock cylinder has been forced from a closed, normal use position into an axially inwardly moved position.

During normal use, the locking plate is movable from a locked to an unlocked state (and vice versa) by rotation of the lock cylinder and the eccentric cam connected thereto. If during an attempt to force the closed ring lock an elongate object is struck with (great) force into the lock cylinder, the eccentric cam is slid into the blocking recess. This makes rotation of the eccentric cam virtually impossible, so that the locking plate cannot be brought from the locked to the unlocked position anymore. This constitutes an extra security against theft.

As during manufacture of the lock housing the blocking recess has been provided in it as an integral part, it is virtually impossible, when the eccentric cam extends into the blocking recess, to remove it therefrom. Preferably, also the blocking recess is covered by the covering cap legs, so that also access to the blocking recess using a drill is virtually impossible, at least when the covering cap is made from a hardened material that is resistant to drilling.

In a further elaboration of the invention the lock cylinder comprises a first and a second part, while the lock cylinder is provided with a second circumferential groove, which is located between said first and said second part of the lock cylinder, and this second circumferential groove forms a second break protection, which breaks upon exertion of an axial force on the lock cylinder above a particular threshold value.

What is achieved with the provision of a second break protection is that sabotaging the ring lock is made still more difficult than when only one break protection is provided.

In an embodiment, the ring lock may be provided with:
- a cable or chain provided with a cable pin having a cable pin circumferential groove;
- a cable pin opening, which is provided in the lock housing and which extends in the direction of a cable pin opening axis, in which the cable pin can be received; and
- a fixing element which is movably arranged in the lock housing and which is in engagement with the locking plate or the eccentric cam and which is bringable in a locking position in which the fixing element extends at least partly into the cable pin opening in a plane substantially perpendicular to the cable pin opening axis and in the locking position is in engagement with the cable pin circumferential groove of a cable pin introduced into the cable pin opening, the fixing element being movable, through rotation of the lock cylinder, into an unlocking position in which it has been brought out of engagement with the cable pin circumferential groove.

The use of this embodiment enables an extra locking means, for example, a cable or chain with cable pin, to be coupled to the ring lock. By means of this cable or chain the ring lock may be fastened to an external object, such as a fence, post or tree. Locking of the ring bolt also results in locking of a cable pin inserted into the cable pin opening and unlocking of the ring bolt at the same time results in unlocking of the cable pin inserted into the cable pin opening.

In a further elaboration of this embodiment, the ring lock may be provided with
- a fixing element receiving cavity formed in the lock housing;
- a fixing element shaft which is an integral part of the lock housing and is included in the fixing element receiving cavity, the fixing element shaft having an axis which is at right angles to the cable pin opening axis;
- a fixing element receiving cavity supply opening which provides access to the fixing element receiving cavity and via which fixing element receiving cavity supply opening the fixing element is placeable in the fixing element receiving cavity, while in an assembled condition of the ring lock the fixing element is bearing mounted on the fixing element shaft, the fixing element being confined by the covering cap legs of the covering cap, extending on opposite sides of the lock housing.

This further elaboration has several advantages. Firstly, the fixing element is easier to place than with the prior art ring lock. Introduction into the fixing element receiving cavity is done in a simple manner via the fixing element receiving cavity supply opening. This simplification of assembly contributes to lower assembly costs. Due to the fixing element being received in the fixing element receiving cavity in the lock housing and being confined there by the covering cap, it is virtually impossible to remove the fixing element. This means that an inserted cable pin is virtually impossible to remove by forcing or removing the fixing element, since the fixing element sits confined in the cast lock housing and moreover is screened off there by the covering cap which is preferably made from hardened material that is resistant to a drill machining operation.

The invention also comprises a method for assembling a ring lock, comprising at least the following steps:
- providing a lock housing which comprises a single casting and which is provided with a ring bolt channel extending along a circular segment-shaped axis in an XZ plane of an orthogonal XYZ coordinate system defining an X direction, a Y direction and a Z direction, the ring bolt channel being bounded by ring bolt channel walls forming an integral part of the casting;
- providing a ring bolt having a substantially circular segment-shaped configuration;
- providing a lock mechanism which comprises a lock cylinder and a locking plate, the lock cylinder having a lock cylinder axis extending in the X direction of the XYZ coordinate system, the lock cylinder being provided with an eccentric cam which is disposed eccentrically relative to the lock cylinder axis;
- sliding the ring bolt into the ring bolt channel along the circular segment-shaped axis of the ring bolt channel, such that the ring bolt is enclosed by the ring bolt channel walls, the ring bolt being bringable into a closed position and an opened position;
- introducing the locking plate parallel to the Y direction into a locking plate receiving cavity provided in the lock housing;
- introducing the lock cylinder parallel to the X direction into the lock housing, such that the lock cylinder engages the locking plate and the ring bolt in the closed position is locked by the locking plate and through rotation of the lock cylinder is released to be brought into the opened position.

The above-described method for assembling a ring lock has several advantages. Due to the lock housing consisting of a single casting, assembling the parts is relatively easy. The different parts can be slid into the lock housing in a simple manner in a predetermined sequential order, which makes assembly easier. In addition, compared with the known stacking assembly of the known ring locks, this method leads to an improved construction that is much better resistant to sabotage. In the known method, the parts of the ring lock are substantially 'stacked' onto each other from one direction as described hereinbefore. Consequently, the parts are relatively easy to detach from each other once a lock front cover or a lock rear cover has been broken open. In the case of a lock made with the method according to the invention, if the lock front cover or the lock rear cover were broken open, the lock still could not be further taken apart because, for one thing, the ring bolt can only be removed from the lock housing along the circular segment-shaped axis of the ring bolt channel of the lock housing. Also, access to the lock cylinder is difficult because it is surrounded on all sides by the lock housing implemented as a one-piece casting. Only if the lock cylinder were somehow, as a whole, pulled out of the lock housing in the X direction, which is particularly difficult due to the at least one break protection incorporated in the lock cylinder, might manipulation of the locking plate be possible.

In an embodiment of the method in which the lock housing is provided with a cable pin opening, the method can comprise:
- providing a fixing element which in a closed position of the ring lock is in engagement with a cable pin arranged in the cable pin opening, for locking the cable pin in the cable pin opening; and
- introducing the fixing element parallel to a Y direction into a fixing element receiving cavity which forms an integral part of the lock housing, such that the fixing element is movably arranged in the lock housing.

Thus placing a fixing element is particularly simple and even makes automated assembly possible.

In an embodiment, the method can further comprise:
- providing a covering cap which has a substantially U-shaped configuration with a covering cap body and two covering cap legs extending from the covering cap body;
- placing the covering cap in Z direction over the lock housing, such that the covering cap legs extend on opposite sides of the lock housing, whereby the covering cap covers the locking plate receiving cavity supply opening such that the locking plate is confined in the locking plate receiving cavity.

In further elaboration of the embodiment of the method in which also the fixing element and the covering cap are placed, the method may additionally be characterized in that through placing the covering cap at least one of the covering cap legs covers the fixing element receiving cavity supply opening, such that the fixing element is confined in the fixing element receiving cavity.

In these further elaborations of the method, the covering cap cannot be simply taken off either, because it is removable in Z direction only. This last is only possible if the lock front cover and the lock rear cover have been wholly removed adjacent the lock housing. Access to the locking plate or the fixing element therefore remains virtually impossible, even when either of the lock front cover or the lock rear cover is removed. Thus, sabotage of the lock obtained with this method becomes virtually impossible.

The invention is further clarified below on the basis of an example, with reference to the figures.

### BRIEF DESCRIPTION OF THE FIGURES

Fig. 1 is a perspective exploded view of an example of a ring lock incorporating various embodiments of the invention;
Fig. 2 is a perspective view of the ring lock represented in Fig. 1 with omission of the lock front cover and the lock rear cover;
Fig. 3 is a front view of the ring lock 1 of Fig. 2;
Fig. 4 is a cross-sectional view of the ring lock of Fig. 3 along the line IV-IV;
Fig. 5 is a cross-sectional view of the ring lock 1 of Fig. 4 along the line V-V; and
Fig. 6 comprises a perspective view of the ring lock 1 of Fig. 1 in exploded view, prior to assembly.

### DETAILED DESCRIPTION

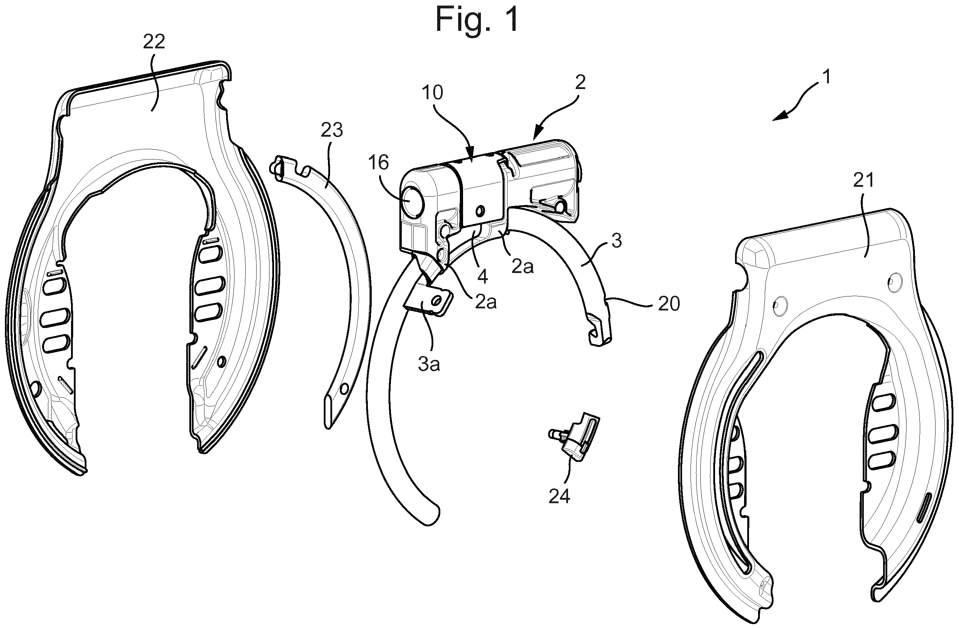

Figs. 1-6 show an example of a ring lock incorporating various embodiments as described in the subclaims. It is noted that the embodiments can also be applied independently of each other and that the invention is not limited to the example shown in the figures. The reference numerals are used herein for clarification but have no limiting effect. An embodiment may also be implemented in a manner other than represented in the example shown in the figures.

Figs. 1-6 show an example of a ring lock according to the invention. In the most general terms, the ring lock comprises a lock housing 2, a lock mechanism included in the lock housing 2 and comprising various parts which will be discussed in more detail hereinafter. Further, the ring lock comprises a ring bolt 3 having a substantially circular segment-shaped configuration. The ring bolt 3 can be brought in a closed position and an opened position, and in the closed position is locked by the lock mechanism and through operation of the lock mechanism can be released to be brought into the opened position. The lock housing 2 comprises a single casting with a ring bolt channel 4 extending along a circular segment-shaped axis C. The ring bolt channel 4 is bounded by ring bolt channel walls 2a which are an integral part of the casting and which enclose the ring bolt 3 which is in the ring bolt channel 4, such that the ring bolt 3 is removable from the ring bolt channel 4 and placeable therein solely in the direction of the circular segment-shaped axis C.

Fig. 1 further shows a lock front cover 21 and a lock rear cover 22. In addition to the movable ring bolt 3, the ring lock 1 also comprises a fixed ring bracket 23. Just like the movable ring bolt 3, this fixed ring bracket 23 is generally made from hardened material that cannot, or hardly so, be sawn through or ground through with a saw or grinding wheel. In a closed position of the ring lock 1, the movable ring bolt 3 and the fixed ring bracket 23 form a closed circular ring which is not interrupted at any circumferential position. Further, Fig. 1 shows a fastening element 24 by means of which the fixed ring bracket 23 is connected with the lock front cover 21 and the lock rear cover 22 and which provides a point of engagement for a first end of a helical spring (not shown), which helical spring is connected by a second end thereof to the movable ring bolt 3. When the lock mechanism is operated, the movable ring bolt 3 is released and the helical spring pulls the movable ring bolt 3 into the opened position. To close the lock, a user must move the movable ring bolt 3, against the spring action of the helical spring, into the closed position. To that end, the ring bolt is generally provided with a knob which, in this exemplary embodiment, is connected with the flange 3a which is visible in Fig. 1. Finally, Fig. 1 shows a covering cap 10 which is placed on the lock housing 2 and which will be described in more detail hereinafter.

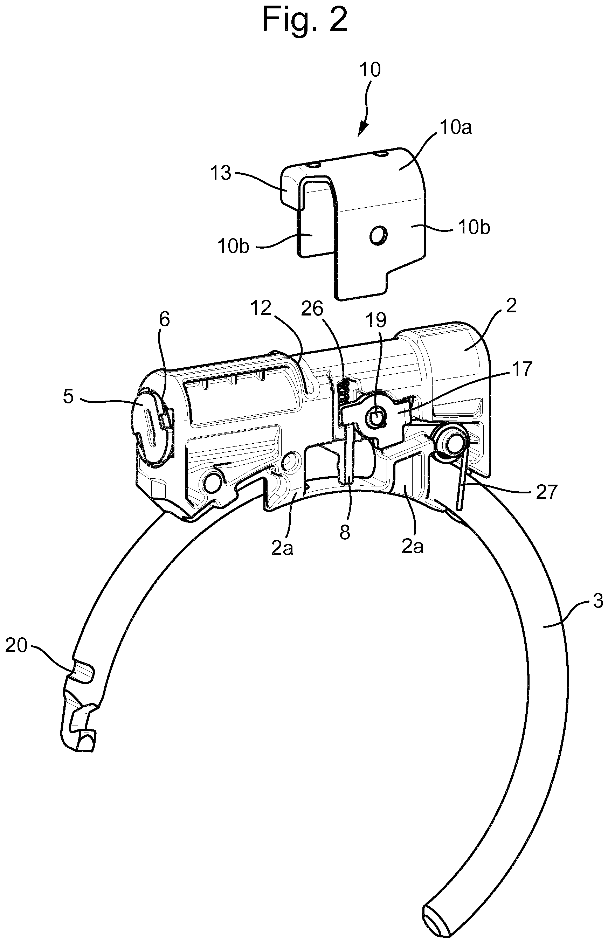

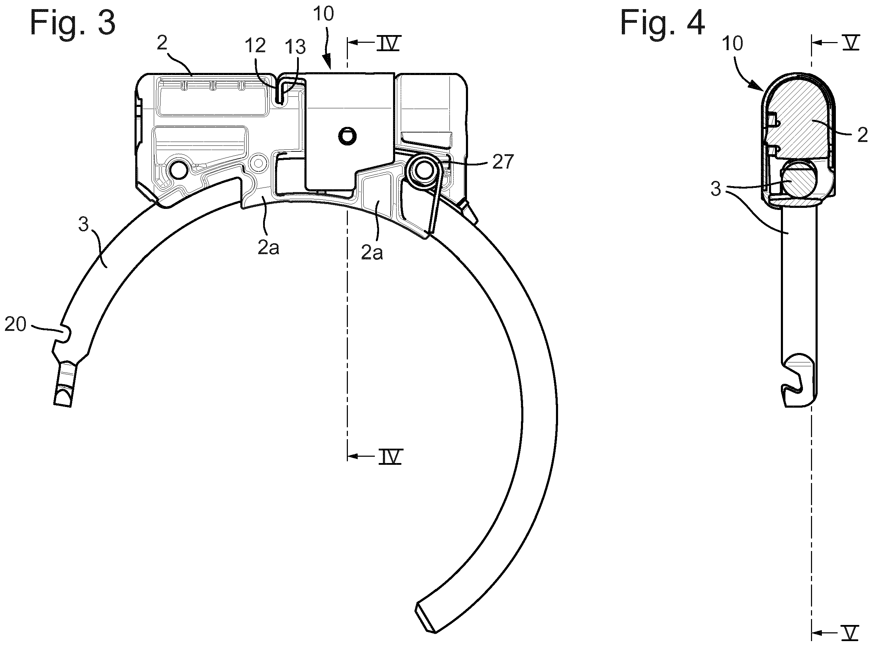

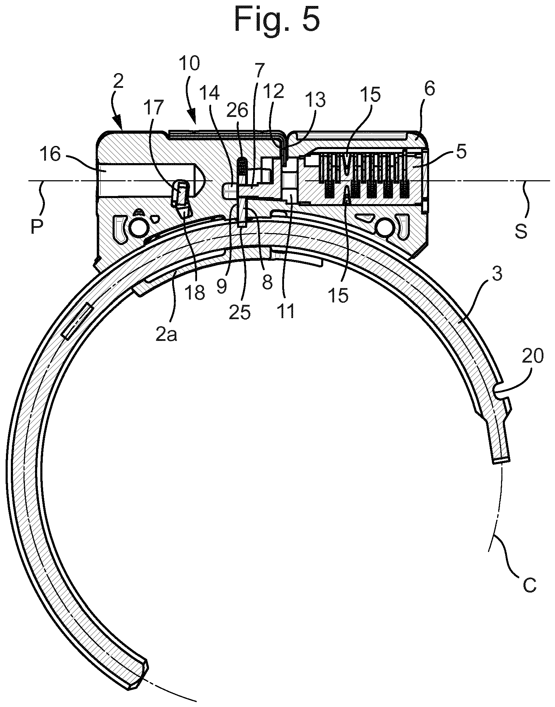

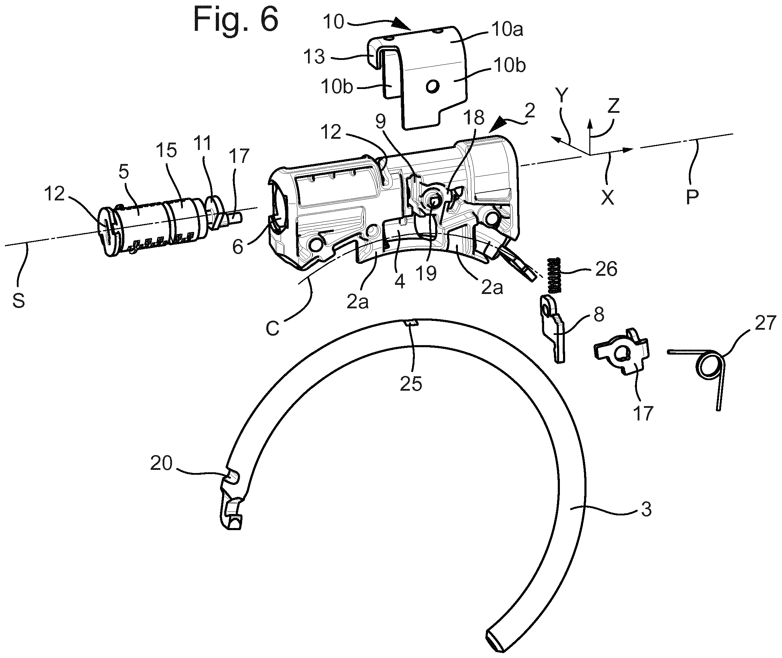

Fig. 2 is a perspective front view of an embodiment of a ring lock 1, with the covering cap 10 lifted off the lock housing 2, so that parts of the lock mechanism are visible. In Fig. 2 there is shown a lock cylinder 5 which is received in a lock cylinder opening 6 of the lock housing 2. The lock cylinder 5 extends in the direction of a lock cylinder axis S and is connected with an eccentric cam 7 (see Figs. 5 and 6), which is disposed eccentrically relative to the lock cylinder axis S. Also visible is a locking plate 8, which is movably included in the lock housing 2 and is in engagement with the eccentric cam 7. In a closed condition of the ring bolt 3, the locking plate 8 engages a notch 20 (see also Figs. 3, 6) which is provided in the ring bolt 3. To this end, a first spring 26 (see also Fig. 6) is present which biases the locking plate 8 towards the ring bolt 3. In the opened condition of the ring bolt 3, the locking plate 8 can also engage a notch 25 in the ring bolt 3 to prevent the ring bolt 3 moving out of the opened position at an undesired moment. Such an event is unwanted because during cycling it could lead to the ring bolt 3 moving between the spokes of the bicycle wheel, thereby leading to a sudden blocking of the wheel, with all the consequences thereof. Through rotation of the lock cylinder 5 and the eccentric cam 7 connected therewith, the locking plate 8 is bringable, against the spring action of the first spring 26, into an unlocking position, in which it is out of engagement with the notch 20. The ring bolt 3 is then released to be brought into the opened position. This generally takes place automatically by means of the earlier-mentioned helical draw spring, not shown. The locking plate 8 is received in a locking plate receiving cavity 9, which is formed in the lock housing 2. The locking plate receiving cavity 9 is provided with a locking plate receiving cavity supply opening, via which the locking plate 8 can be brought into the locking plate receiving cavity 9 during assembly.

Also represented is a covering cap 10 having a substantially U-shaped configuration. In this exemplary embodiment, the covering cap 10 consists of a covering cap body 10a and two covering cap legs 10b extending from the covering cap body 10a. The covering cap legs 10b in assembled condition of the ring lock 1 extend on opposite sides of the lock housing 2. The covering cap 10 in that condition covers the locking plate receiving cavity supply opening, such that the locking plate 8 is confined in the locking plate receiving cavity 9.

Further, Fig. 2 shows a fixing element receiving cavity 18 in the lock housing 2 (see also Fig. 6), in which a fixing element shaft 19 is included, which is an integral part of the lock housing 2. The fixing element shaft 19 has an axis that is at right angles to a cable pin opening axis P of a cable pin opening 16 (represented in Fig. 5). A fixing element 17, which is movably, and in this example more particularly pivotably, arranged in the lock housing 2, is in engagement with the locking plate 8 in this example. In an alternative implementation, the fixing element 17 could also be in engagement with the eccentric cam 7. In the example shown, a second spring 27 is present (see Fig. 6) which engages the fixing element 17 and which biases the fixing element 17 into a locked position. In that fixing position, the fixing element 17 extends, at least partly, into the cable pin opening 16 (visible in Fig. 5) in a plane that extends substantially perpendicular to the cable pin opening axis P. In the locked position the fixing element 17 is in engagement with a cable pin circumferential groove of a cable pin (not shown) arranged in the cable pin opening. In an alternative embodiment, the fixing element 17 could be biased into the locked position by means of the spring action of the first spring 26 instead of by means of the spring action of the second spring 27. In that alternative embodiment, only a single spring would be involved then. Through rotation of the lock cylinder 5 and the eccentric cam 7 connected therewith, the locking plate 8 is moved, against spring action, in an unlocking position. By the movement of the locking plate 8, also the fixing element 17 is moved, more particularly pivoted, and the fixing element 17 is thus brought out of engagement with the cable pin circumferential groove, so that the cable pin can be taken out of the cable pin opening 16.

In an alternative embodiment, the fixing element 17, instead of being engaged by the locking plate 8, may be engaged directly by the eccentric cam 7, so that the eccentric cam 7 moves not only the locking plate 8 but also the fixing element 17.

The fixing element 17 is placeable in the fixing element receiving cavity 18 via a fixing element receiving cavity supply opening which provides access to the fixing element receiving cavity 18. The fixing element 17 in this example is bearing-mounted on the fixing element shaft 19. In the assembled condition, the fixing element 17 is enclosed by the covering cap legs 10b of the covering cap 10 extending on opposite sides of the lock housing 2.

Fig. 3 is a schematic front view of the ring lock 1 represented in Fig. 2, taken in assembled condition. Fig. 3 shows the lock housing 2 having included therein the ring bolt 3 and the likewise included lock cylinder 5. Also shown is the covering cap 10 with covering cap body 10a and covering cap legs 10b. In the figure, it is visible that the covering cap legs 10b confine the (not visible) locking plate 8 in locking plate receiving cavity 9 and the (not visible) fixing element 17 in fixing element receiving cavity 18.

Fig. 4 is a cross-sectional view of the ring lock of Fig. 3 along the line IV-IV. The figure shows the lock housing 2 with ring bolt 3 included therein and the covering cap legs 10b of the covering cap on opposite sides of the lock housing 2.

Fig. 5 is a cross-sectional view of the ring lock 1 of Fig. 4 along the line V-V. In Fig. 5 the lock housing 2 is represented, in which the ring bolt 3 and the lock cylinder 5 are included. The ring bolt 3 is received in the ring bolt channel 4 and is enclosed by the ring bolt channel walls 2a, such that the ring bolt 3 is removable from the ring bolt channel 4, and placeable therein, solely in the direction of the circular segment-shaped axis C. Visible, further, is the cable pin opening 16 with the fixing element 17 in it, at least the portion thereof that extends into the cable pin opening 16 and which extends in a plane substantially perpendicular to the cable pin opening axis P.

Further, it is visible that the lock cylinder 5 extends in the direction of a lock cylinder axis S and is connected with the eccentric cam 7, which is disposed eccentrically relative to the lock cylinder axis. Fig. 5 also shows a blocking recess 14, which is integrally provided in the lock housing 2. The blocking recess 14 is arranged such that the eccentric cam 7 extends into the blocking recess 14 when the lock cylinder 5 has been forced from a closed, normal use position into an axially inwardly moved position. The eccentric cam 7 extending into the blocking recess 14 is then blocked and the locking plate 8 being in engagement therewith cannot be moved out of the locking position anymore. As a consequence, the locking plate 8 is not bringable from the locked to the unlocked state anymore.

Further, in the lock cylinder 5 a circumferential groove 11 is visible near the connection between the lock cylinder 5 and the eccentric cam 7. This connection constitutes at the circumferential groove 11 a first break protection, which breaks upon exertion of an axial force above a particular threshold value. Also visible is that the lock cylinder 5 in this exemplary embodiment comprises a first and a second part, with a second circumferential groove 15 located between the first and second part of the lock cylinder 5. The second circumferential groove 15 forms a second break protection, which breaks upon exertion of an axial force on the lock cylinder 5 above a particular threshold value.

Fig. 5 also shows that the lock housing 2 is provided with a recess 12, which extends into the lock cylinder opening 6. The covering cap 10 is provided with a blocking flange 13, which substantially extends in a plane extending perpendicularly to the lock cylinder axis S. The blocking flange 13 extends through the recess 12 into the lock cylinder opening 6 and the circumferential groove 11 of the lock cylinder 5, such that the lock cylinder 5 is confined in axial direction by the blocking flange 13.

Fig. 6 comprises an exploded view of the ring lock 1 of Fig. 2, prior to assembly. In this figure, an orthogonal XYZ coordinate system is indicated, defining an X direction, a Y direction and a Z direction. The ring bolt channel 4 formed by the lock housing 2 extends along a circular segment-shaped axis C in the XZ plane of the XYZ coordinate system. The lock cylinder 5 has a lock cylinder axis S which extends parallel to the X direction of the XYZ coordinate system. The eccentric cam 7 is disposed eccentrically relative to the lock cylinder axis S. Also, Fig. 6 shows the fixing element 17. The fixing element 17 in a closed position of the ring lock 1 is in engagement with a cable pin (not shown) plugged into the cable pin opening 16. The engagement of the fixing element 17 serves for locking the cable pin in the cable pin opening 16.

During the assembly of the ring lock 1, the ring bolt 3, with the substantially circular segment-shaped configuration, is slid along the circular segment-shaped axis C into the ring bolt channel 4. The ring bolt 3 is thereby enclosed by the ring bolt channel walls 2a and is bringable into a closed position and an opened position.

Next, the locking plate 8, along with the associated first spring 26, is introduced in a direction parallel to the Y direction into the locking plate receiving cavity 9 provided in the lock housing 2. The locking plate 8 thereby engages, in closed condition of the ring lock, in a notch 20 in the circular segment-shaped ring bolt 3. Further, parallel to the Y direction, the fixing element 17 along with the associated second spring 27 is introduced into the fixing element receiving cavity 18 which is an integral part of the lock housing 2. The fixing element 17 is arranged on the fixing element shaft 19, such that the fixing element 17 is pivotably arranged in the lock housing 2. The fixing element 17 is then in engagement with the locking plate 8 or, in an alternative embodiment, in engagement with the eccentric cam 7.

After this, the lock cylinder 5 is inserted parallel to the X direction into the lock cylinder opening 6 of the lock housing 2, such that the eccentric cam 7 of the lock cylinder 5 engages the locking plate 8. The ring bolt 3 in the closed position is locked by the locking plate 8, and through rotation of the lock cylinder 5 is released so that it can be brought in the opened position, for instance by means of the helical draw spring, not shown.

The covering cap 10 is placed parallel to the Z direction over the lock housing 2. The placement is such that the covering cap legs 10b extend on opposite sides of the lock housing 2, whereby the covering cap 10 covers the locking plate receiving cavity supply opening, such that the locking plate 8 is confined in the locking plate receiving cavity 9. Also, at least one of the covering cap legs 10b extends such that it covers the fixing element receiving cavity supply opening, such that the fixing element 17 is confined in the fixing element receiving cavity 18.

The above-described assembly of the ring lock 1 is simple and quick and may even take place in an automated manner. As the parts are brought towards each other from different directions, disassembly upon sabotage of the lock is much more difficult than with conventional locks assembled by the traditional stacking method.

The various embodiments described above can be applied independently of each other and combined with each other in different ways. The reference numerals in the detailed description and the claims do not limit the description of the embodiments and the claims and serve for clarification only.

## Claims

1. A ring lock at least comprising:
- a lock housing (2);
- a lock mechanism which is included in the lock housing (2);
- a ring bolt (3) having a substantially circular segment-shaped configuration, while the ring bolt (3) is bringable in a closed position and an opened position and in the closed position is locked by the lock mechanism and through operation of the lock mechanism is released to be brought in the opened position;
wherein the lock housing (2) comprises a single casting with a ring bolt channel (4) which extends along a circular segment-shaped axis, the ring bolt channel (4) being bounded by ring bolt channel walls (2a) which form an integral part of the casting, **characterized in that** the ring bolt channel walls (2a) enclose the ring bolt (3) which is in the ring bolt channel (4), such that the ring bolt (3) is removable from the ring bolt channel (4) and is placeable therein solely in the direction of the circular segment-shaped axis.

2. The ring lock according to claim 1, wherein the lock housing (2) is cast from a metal or from an alloy intended for casting.

3. The ring lock according to any one of the preceding claims, wherein the lock mechanism comprises:
- a lock cylinder (5) which is received in a lock cylinder opening (6) of the lock housing (2) and which extends in the direction of a lock cylinder axis;
- an eccentric cam (7) which is disposed eccentrically with respect to the lock cylinder axis and is connected with the lock cylinder (5);
- a locking plate (8) which is included movably in the lock housing (2) and is in engagement with the eccentric cam (7), while the locking plate (8) in a closed condition of the ring bolt (3) engages a notch (20) provided in the ring bolt (3) and through rotation of the lock cylinder (5) and the eccentric cam (7) connected therewith is bringable, against spring action, in an unlocking position in which it has been brought out of engagement with the notch (20);
wherein the ring lock (1) further comprises:
- a locking plate receiving cavity (9) which is formed in the lock housing (2) and which is provided with a locking plate receiving cavity supply opening, while the locking plate (8) in an assembled condition of the ring lock (1) is received in the locking plate receiving cavity (9), while during assembly the locking plate (8) is bringable via the locking plate receiving cavity supply opening into the locking plate receiving cavity (9); and
- a covering cap (10) which has a substantially U-shaped configuration with a covering cap body (10a) and two covering cap legs (10b) extending from the covering cap body (10a) which extend on opposite sides of the lock housing (2), the covering cap (10) covering the locking plate receiving cavity-supply opening such that the locking plate (8) is confined in the locking plate receiving cavity (9).

4. The ring lock (1) according to claim 3, wherein the covering cap (10) comprises a hardened metal, such as hardened steel or a hard alloy.

5. The ring lock (1) according to claim 3 or 4, wherein the lock cylinder (5) includes a circumferential groove (11) near the connection between the lock cylinder (5) and the eccentric cam (7), so that at the circumferential groove (11) a first break protection is provided, which breaks upon exertion of an axial force above a particular threshold value.

6. The ring lock (1) according to claim 5, wherein:
- the lock housing (2) is provided with a recess (12) which extends into the lock cylinder opening (6); and wherein
- the covering cap (10) is provided with a blocking flange (13) which extends substantially in a plane perpendicular to the lock cylinder axis and which in an assembled condition of the lock extends through the recess (12) into the lock cylinder opening (6), into the circumferential groove in the lock cylinder (5), such that. the lock cylinder (5) is confined in axial direction by the blocking flange (13).

7. The ring lock (1) according to claim 6, comprising:
- a blocking recess (14) which is integrally included in the lock housing (2) and which is arranged such that the eccentric cam (7) extends into the blocking recess (14) when the lock cylinder (5) has been forced from a closed, normal use position into an axially inwardly moved position, whereby the eccentric cam (7) extending into the blocking recess (14) is fixed and blocks the locking plate (8) being in engagement therewith, such that the locking plate (8) is not bringable from the locked to the unlocked state anymore.

8. The ring lock (1) according to claim 6 or 7, wherein the lock cylinder (5) comprises a first and a second part, while the lock cylinder (5) is provided with a second circumferential groove (15), which is located between said first and said second part of the lock cylinder (5), and the second circumferential groove (15) forms a second break protection, which breaks upon exertion of an axial force on the lock cylinder (5) above a particular threshold value.

9. The ring lock (1) according to any one of claims 2-8, comprising:
- a cable or chain comprising a cable pin with a cable pin circumferential groove;
- a cable pin opening (16), which is provided in the lock housing (2) and which extends in the direction of a cable pin opening axis, in which the cable pin can be received;
- a fixing element (17) which is movably arranged in the lock housing (2) and which is in engagement with the locking plate (8) or the eccentric cam (7) and which is bringable in a locking position in which the fixing element (17) extends at least partly into the cable pin opening (16) in a plane extending substantially perpendicular to the cable pin opening axis and in the locking position is in engagement with the cable pin circumferential groove of a cable pin introduced into the cable pin opening (16), the fixing element (17) being movable, through rotation of the lock cylinder (5), into an unlocking position, in which it has been brought out of engagement with the cable pin circumferential groove.

10. The ring lock (1) according to claim 9, comprising:
- a fixing element receiving cavity (18) formed in the lock housing (2);
- a fixing element shaft (19) which is an integral part of the lock housing (2) and is included in the fixing element receiving cavity (18), the fixing element shaft (19) having an axis which is at right angles to the cable pin opening axis;
- a fixing element receiving cavity supply opening which provides access to the fixing element receiving cavity (18) and via which fixing element receiving cavity supply opening the fixing element is placeable in the fixing element receiving cavity (18), while in an assembled condition of the ring lock (1) the fixing element (17) is bearing mounted on the fixing element shaft (19), the fixing element (17) being confined by the covering cap legs (10b) of the covering cap (10) extending on opposite sides of the lock housing (2).

11. A method for assembling a ring lock (1) according to any one of claims 3-10, comprising at least the following steps:
- providing a lock housing (2) which comprises a single casting and which is provided with a ring bolt channel (4) extending along a circular segment-shaped axis in an XZ plane of an orthogonal XYZ coordinate system defining an X direction, a Y direction and a Z direction, the ring bolt channel (4) being bounded by ring bolt channel walls (2a) forming an integral part of the casting;
- providing a ring bolt (3) having a substantially circular segment-shaped configuration;
- providing a lock mechanism comprising a lock cylinder (5) and a locking plate (8), the lock cylinder (5) having a lock cylinder axis extending in the X direction of the XYZ coordinate system, the lock cylinder (5) being provided with an eccentric cam (7) which is disposed eccentrically relative to the lock cylinder axis;
- sliding the ring bolt (3) into the ring bolt channel (4) along the circular segment-shaped axis of the ring bolt channel (4), such that the ring bolt (3) is enclosed by the ring bolt channel walls (2a), the ring bolt (3) being bringable into a closed position and an opened position;
- introducing the locking plate (8) parallel to the Y direction into a locking plate receiving cavity (9) provided in the lock housing (2);
- introducing the lock cylinder (5) parallel to the X direction into the lock housing (2), such that the lock cylinder (5) engages the locking plate (8) and the ring bolt (3) in the closed position is locked by the locking plate (8) and through rotation of the lock cylinder (5) is released to be brought in the opened position.

12. The method according to claim 11, wherein the lock housing (2) is provided with a cable pin opening (16), wherein the method comprises:
- providing a fixing element (17) which in a closed position of the ring lock (1) is in engagement with a cable pin arranged in the cable pin opening (16), for locking the cable pin in the cable pin opening (16);
- introducing the fixing element (17) parallel to a Y direction via a fixing element receiving cavity supply opening into a fixing element receiving cavity (18) which forms an integral part of the lock housing (2), such that the fixing element (17) is movably arranged in the lock housing (2).

13. The method according to one of claims 11 or 12, wherein the method comprises:
- providing a covering cap (10) which has a substantially U-shaped configuration with a covering cap body (10a) and two covering cap legs (10b) extending from the covering cap body (10a);
- placing the covering cap (10) in Z direction over the lock housing (2), such that the covering cap legs (10b) extend on opposite sides of the lock housing (2), whereby the covering cap (10) covers the locking plate receiving cavity supply opening such that the locking plate (8) is confined in the locking plate receiving cavity (9).

14. A method according to claim 13 when dependent on claim 12, wherein through placement of the covering cap (10) at least one of the covering cap legs (10b) covers the fixing element receiving cavity supply opening, such that the fixing element (17) is confined in the fixing element receiving cavity (18).

## Patentansprüche

1. Ringschloss, mindestens umfassend:
- ein Schlossgehäuse (2);
- einen Schlossmechanismus, der in dem Schlossgehäuse (2) enthalten ist;
- einen Ringbolzen (3) mit einer im Wesentlichen kreissegmentförmigen Konfiguration, während der Ringbolzen (3) in eine geschlossene Position und eine geöffnete Position gebracht werden kann und in der geschlossenen Position von dem Schlossmechanismus verriegelt wird und durch Bedienung des Schlossmechanismus freigegeben wird, um in die geöffnete Position gebracht zu werden;
wobei das Schlossgehäuse (2) einen Einzelgusskörper mit einem Ringbolzenkanal (4) umfasst, der entlang einer kreissegmentförmigen Achse verläuft, welcher Ringbolzenkanal (4) von Ringbolzenkanalwänden (2a) begrenzt wird, die einen integralen Teil des Gusskörpers bilden, **dadurch gekennzeichnet, dass** die Ringbolzenkanalwände (2a) den Ringbolzen (3), der in dem Ringbolzenkanal (4) ist, so einschließen, dass der Ringbolzen (3) aus dem Ringbolzenkanal (4) entfernt werden kann und in diesen nur in Richtung der kreissegmentförmigen Achse platziert werden kann.

2. Ringschloss nach Anspruch 1, wobei das Schlossgehäuse (2) aus einem Metall oder aus einer zum Gießen bestimmten Legierung gegossen ist.

3. Ringschloss nach einem der vorhergehenden Ansprüche, wobei der Schlossmechanismus umfasst:
- einen Schlosszylinder (5), der in eine Schlosszylinderöffnung (6) des Schlossgehäuses (2) aufgenommen wird und in Richtung einer Schlosszylinderachse verläuft;
- eine Exzenternocke (7), die exzentrisch in Bezug auf die Schlosszylinderachse angeordnet ist und mit dem Schlosszylinder (5) verbunden ist;
- eine Verriegelungsplatte (8), die beweglich in dem Schlossgehäuse (2) enthalten ist und im Eingriff mit der Exzenternocke (7) ist, während die Verriegelungsplatte (8) in einem geschlossenen Zustand des Ringbolzens (3) in eine in dem Ringbolzen (3) bereitgestellte Einkerbung (20) greift und durch Drehung des Schlosszylinders (5) und der damit verbundenen Exzenternocke (7) gegen Federwirkung in eine Entriegelungsposition gebracht werden kann, in der sie aus dem Eingriff mit der Einkerbung (20) gebracht wurde;
wobei das Ringschloss (1) ferner umfasst:
- einen Verriegelungsplatten-Aufnahmehohlraum (9), der in dem Schlossgehäuse (2) gebildet ist und der mit einer Zuführöffnung des Verriegelungsplatten-Aufnahmehohlraums versehen ist, während die Verriegelungsplatte (8) in einem montierten Zustand des Ringschlosses (1) in den Verriegelungsplatten-Aufnahmehohlraum (8) aufgenommen ist, während bei der Montage die Verriegelungsplatte (8) über die Zuführöffnung des Verriegelungsplatten-Hohlraums in den Verriegelungsplatten-Aufnahmehohlraum (9) gebracht werden kann; und
- eine Abdeckkappe (10), die eine im Wesentlichen U-förmige Konfiguration hat, mit einem Abdeckkappenkörper (10a) und zwei von dem Abdeckkappenkörper (10a) verlaufenden Abdeckkappenbeinen (10b), die an entgegengesetzten Seiten von dem Schlossgehäuse (2) verlaufen, wobei die Abdeckkappe (10) die Zuführöffnung des Abdeckplatten-Aufnahmehohlraums so abdeckt, dass die Verriegelungsplatte (8) in den Verriegelungsplatten-Aufnahmehohlraum (9) eingeschlossen ist.

4. Ringschloss (1) nach Anspruch 3, wobei die Abdeckkappe (10) ein gehärtetes Metall wie etwa gehärteten Stahl oder eine Hartlegierung umfasst.

5. Ringschloss (1) nach Anspruch 3 oder 4, wobei der Schlosszylinder (5) eine umlaufende Rille (11) nahe der Verbindung zwischen dem Schlosszylinder (5) und der Exzenternocke (7) umfasst, sodass an der umlaufenden Rille (11) ein erster Brechschutz bereitgestellt ist, der bei Ausübung einer axialen Kraft über einem bestimmten Schwellenwert bricht.

6. Ringschloss (1) nach Anspruch 5, wobei:
- das Schlossgehäuse (2) mit einer Vertiefung (12) versehen ist, die in die Schlosszylinderöffnung (6) verläuft; und wobei
- die Abdeckkappe (10) mit einem Blockierungsflansch (13) versehen ist, der im Wesentlichen in einer Ebene senkrecht zu der Schlosszylinderachse verläuft und der in einem montierten Zustand des Schlosses durch die Vertiefung (12) in die Schlosszylinderöffnung (6) in die umlaufende Rille in dem Schlosszylinder (5) verläuft, sodass der Schlosszylinder (5) in axialer Richtung durch den Blockierungsflansch (13) begrenzt wird.

7. Ringschloss (1) nach Anspruch 6, umfassend:
- eine Blockierungsvertiefung (14), die integral in dem Schlossgehäuse (2) enthalten ist und die so angeordnet ist, dass die Exzenternocke (7) in die Blockierungsvertiefung (14) verläuft, wenn der Schlosszylinder (5) von einer geschlossenen, normalen Verwendungsposition in eine axial nach innen bewegte Position gezwungen wurde, wobei die in die Blockierungsvertiefung (14) verlaufende Exzenternocke (7) fixiert ist und die damit in Eingriff befindliche Verriegelungsplatte (8) so blockiert, dass die Verriegelungsplatte (8) nicht mehr aus dem verriegelten in den entriegelten Zustand gebracht werden kann.

8. Ringschloss (1) nach Anspruch 6 oder 7, wobei der Verriegelungszylinder (5) ein erstes und ein zweites Teil umfasst, während der Schlosszylinder (5) mit einer zweiten umlaufenden Rille (15) versehen ist, die zwischen dem ersten und dem zweiten Teil des Schlosszylinders (5) angeordnet ist, und die zweite umlaufende Rille (15) einen zweiten Brechschutz bildet, der bricht, wenn eine axiale Kraft über einem bestimmten Schwellenwert auf den Schlosszylinder (5) ausgeübt wird.

9. Ringschloss (1) nach einem der Ansprüche 2-8, umfassend:
- ein Kabel oder eine Kette, umfassend einen Kabelstift mit einer umlaufenden Kabelstiftrille;
- eine Kabelstiftöffnung (16), die in dem Schlossgehäuse (2) bereitgestellt ist und die in Richtung einer Kabelstiftöffnungsachse verläuft, in die der Kabelstift aufgenommen werden kann;
- ein Befestigungselement (17), das beweglich in dem Schlossgehäuse (2) angeordnet ist und das in Eingriff mit der Verriegelungsplatte (8) oder der Exzenternocke (7) ist und das in eine Verriegelungsposition gebracht werden kann, in der das Befestigungselement (17) in einer Ebene, die im Wesentlichen senkrecht zu der Kabelstiftöffnungsachse verläuft, mindestens teilweise in die Kabelstiftöffnung (16) verläuft und in der Verriegelungsposition in Eingriff mit der umlaufenden Kabelstiftrille eines in die Kabelstiftöffnung (16) eingeführten Kabels ist, wobei das Befestigungselement (17) durch Drehung des Schlosszylinders (5) in eine Entriegelungsposition bewegt werden kann, in der es aus dem Eingriff mit der umlaufenden Kabelstiftrille gebracht wurde.

10. Ringschloss (1) nach Anspruch 9, umfassend:
- einen Befestigungselement-Aufnahmehohlraum (18), gebildet in dem Schlossgehäuse (2);
- einen Befestigungselementschaft (19), der ein integraler Teil des Schlossgehäuses (2) ist und in dem Befestigungselement-Aufnahmehohlraum (18) enthalten ist, wobei der Befestigungselementschaft (19) eine Achse hat, die in rechten Winkeln zu der Kabelstiftöffnungsachse ist;
- eine Zuführöffnung des Befestigungselement-Aufnahmehohlraums (18), die Zugang zu dem Befestigungselement-Aufnahmehohlraum ermöglicht, und über welche Zuführöffnung des Befestigungselement-Aufnahmehohlraums das Befestigungselement in den Befestigungselement-Aufnahmehohlraum (18) platziert werden kann, während in einem montierten Zustand des Ringschlosses (1) das Befestigungselement (17) lagermontiert auf dem Befestigungselementschaft (19) ist, während das Befestigungselement (17) durch die Abdeckkappenbeine (10b) der Abdeckkappe (10) verlaufend auf entgegengesetzten Seiten des Schlossgehäuses (2) eingeschlossen wird.

11. Verfahren zur Montage eines Ringschlosses (1) nach einem der Ansprüche 3-10, umfassend mindestens folgende Schritte:
- Bereitstellung eines Schlossgehäuses (2), das einen Einzelgusskörper umfasst und das mit einem Ringbolzenkanal (4) versehen ist, der entlang einer kreissegmentförmigen Achse in einer XZ-Ebene eines XYZ-Koordinatensystems verläuft, das eine X-Richtung, eine Y-Richtung und eine Z-Richtung definiert, wobei der Ringbolzenkanal (4) von Ringbolzenkanalwänden (2a) begrenzt wird, die einen integralen Teil des Gusskörpers bilden;
- Bereitstellung eines Ringbolzens (3), der eine im Wesentlichen kreissegmentförmige Konfiguration aufweist;
- Bereitstellung eines Schlossmechanismus, umfassend einen Schlosszylinder (5) und eine Verriegelungsplatte (8), wobei der Schlosszylinder (5) eine Schlosszylinderachse aufweist, die in X-Richtung des XYZ-Koordinatensystems verläuft, wobei der Schlosszylinder (5) mit einer Exzenternocke (7) versehen ist, die in Bezug auf die Schlosszylinderachse exzentrisch angeordnet ist;
- Schieben des Ringbolzens (3) in den Ringbolzenkanal (4) entlang der kreissegmentförmigen Achse des Ringbolzenkanals (4), sodass der Ringbolzen (3) von den Ringbolzenkanalwänden (2a) eingeschlossen wird, wobei der Ringbolzen (3) in eine geschlossene und eine geöffnete Position gebracht werden kann;
- Einführen der Verriegelungsplatte (8) parallel zu der Y-Richtung in einen Verriegelungsplatten-Aufnahmehohlraum (9), bereitgestellt in dem Schlossgehäuse (2);
- Einführen des Schlosszylinders (5) parallel zu der X-Richtung in das Schlossgehäuse (2), sodass der Schlosszylinder (5) in die Verriegelungsplatte (8) greift und der Ringbolzen (3) in der geschlossenen Position durch die Verriegelungsplatte (8) verriegelt wird und durch Drehung des Schlosszylinders (5) freigegeben wird, um in die geöffnete Position gebracht zu werden.

12. Verfahren nach Anspruch 11, wobei das Schlossgehäuse (2) mit einer Kabelstiftöffnung (16) versehen ist, wobei das Verfahren umfasst:
- Bereitstellung eines Befestigungselements (17), das in einer geschlossenen Position des Ringschlosses (1) in Eingriff mit einem in der Kabelstiftöffnung (16) angeordneten Kabelstifts ist, um den Kabelstift in der Kabelstiftöffnung (16) zu verriegeln;
- Einführen des Befestigungselements (17) parallel zu einer Y-Richtung über eine Zuführöffnung des Befestigungselement-Aufnahmehohlraums in einen Befestigungselement-Aufnahmehohlraum (18), der einen integralen Teil des Schlossgehäuses (2) bildet, sodass das Befestigungselement (17) beweglich in dem Schlossgehäuse (2) angeordnet ist.

13. Verfahren nach einem der Ansprüche 11 oder 12, wobei das Verfahren umfasst:
- Bereitstellung einer Abdeckkappe (10), die eine im Wesentlichen U-förmige Konfiguration hat, mit einem Abdeckkappenkörper (10a) und zwei Abdeckkappenbeinen (10b), verlaufend von dem Abdeckkappenkörper (10a);
- Platzieren der Abdeckkappe (10) in Z-Richtung über dem Schlossgehäuse (2), sodass die Abdeckkappenbeine (10b) an entgegengesetzten Seiten des Schlossgehäuses (2) verlaufen, wobei die Abdeckkappe (10) die Zuführöffnung des Verriegelungsplatten-Aufnahmehohlraums so abdeckt, dass die Verriegelungsplatte (8) in den Verriegelungsplatten-Aufnahmehohlraum (9) eingeschlossen wird.

14. Verfahren nach Anspruch 13, wenn abhängig von Anspruch 12, wobei durch Platzierung der Abdeckkappe (10) mindestens eines der Abdeckkappenbeine (10b) die Zuführöffnung des Befestigungselement-Aufnahmehohlraums so abdeckt, dass das Befestigungselement (17) in den Befestigungselement-Aufnahmehohlraum (18) eingeschlossen wird.

## Revendications

1. Antivol en forme d'anneau comprenant au moins :
un boîtier d'antivol (2) ;
un mécanisme d'antivol qui est inclus dans le boîtier d'antivol (2) ;
un verrou en forme d'anneau (3) ayant une configuration en forme de segment sensiblement circulaire, alors que le verrou en forme d'anneau (3) peut être amené dans une position fermée et une position ouverte et dans la position fermée, est verrouillé par le mécanisme d'antivol et par le fonctionnement du mécanisme d'antivol est libéré pour être amené dans la position ouverte ;
dans lequel le boîtier d'antivol (2) comprend une pièce moulée unique avec un canal de verrou en forme d'anneau (4) qui s'étend le long d'un axe en forme de segment circulaire, le canal de verrou en forme d'anneau (4) étant délimité par des parois de canal de verrou en forme d'anneau (2a) qui font partie intégrante de la pièce moulée, **caractérisé en ce que** les parois de canal de verrou en forme d'anneau (2a) enferment le verrou en forme d'anneau (3) qui est dans le canal de verrou en forme d'anneau (4) de sorte que le verrou en forme d'anneau (3) peut est retiré du canal de verrou en forme d'anneau (4) et peut être placé à l'intérieur de ce dernier uniquement dans la direction de l'axe en forme de segment circulaire.

2. Antivol en forme d'anneau selon la revendication 1, dans lequel le boîtier d'antivol (2) est moulé à partir d'un métal ou à partir d'un alliage prévu pour le moulage.

3. Antivol en forme d'anneau selon l'une quelconque des revendications précédentes, dans lequel le mécanisme d'antivol comprend :
un barillet d'antivol (5) qui est reçu dans une ouverture de barillet d'antivol (6) du boîtier d'antivol (2) et qui s'étend dans la direction d'un axe de barillet d'antivol ;
une came excentrique (7) qui est disposée de manière excentrique par rapport à l'axe de barillet d'antivol et est raccordée avec le barillet d'antivol (5) ;
une plaque de verrouillage (8) qui est incluse de manière mobile dans le boîtier d'antivol (2) et est en mise en prise avec la came excentrique (7), alors que la plaque de verrouillage (8), dans une condition fermée du verrou en forme d'anneau (3), met en prise une encoche (20) prévue dans le verrou en forme d'anneau (3) et par le biais de la rotation du barillet d'antivol (5) et de la came excentrique (7) raccordée à ce dernier, peut être amenée, contre une action de rappel, dans une position de déverrouillage dans laquelle elle a été amenée hors de mise en prise avec l'encoche (20) ;
dans lequel l'antivol en forme d'anneau (1) comprend en outre :
une cavité de réception de plaque de verrouillage (9) qui est formée dans le boîtier d'antivol (2) et qui est prévue avec une ouverture d'alimentation de cavité de réception de plaque de verrouillage, alors que la plaque de verrouillage (8) dans une condition assemblée de l'antivol en forme d'anneau (1) est reçue dans la cavité de réception de plaque de verrouillage (9), alors que pendant l'assemblage, la plaque de verrouillage (8) peut être amenée via l'ouverture d'alimentation de cavité de réception de plaque de verrouillage dans la cavité de réception de plaque de verrouillage (9) ; et
un capuchon de recouvrement (10) qui a une configuration sensiblement en forme de U avec un corps de capuchon de recouvrement (10a) et deux pattes de capuchon de recouvrement (10b) s'étendant à partir du corps de capuchon de recouvrement (10a) qui s'étendent sur les côtés opposés du boîtier d'antivol (2), le capuchon de recouvrement (10) recouvrant l'ouverture d'alimentation de cavité de réception de plaque de verrouillage de sorte que la plaque de verrouillage (8) est confinée dans la cavité de réception de plaque de verrouillage (9).

4. Antivol en forme d'anneau (1) selon la revendication 3, dans lequel le capuchon de recouvrement (10) comprend un métal trempé, tel que l'acier trempé ou un alliage dur.

5. Antivol en forme d'anneau (1) selon la revendication 3 ou 4, dans lequel le barillet d'antivol (5) comprend une rainure circonférentielle (11) à proximité du raccordement entre le barillet d'antivol (5) et la came excentrique (7), de sorte qu'au niveau de la rainure circonférentielle (11), on prévoit une première protection de rupture qui se casse après avoir exercé une force axiale supérieure à une valeur de seuil particulière.

6. Antivol en forme d'anneau (1) selon la revendication 5, dans lequel :
le boîtier d'antivol (2) est prévu avec un évidement (12) qui s'étend dans l'ouverture de barillet d'antivol (6) ; et dans lequel :
le capuchon de recouvrement (10) est prévu avec une bride de blocage (13) qui s'étend sensiblement dans un plan perpendiculaire à l'axe de barillet d'antivol et qui, dans une condition assemblée de l'antivol, s'étend à travers l'évidement (12) dans l'ouverture de barillet d'antivol (6), dans la rainure circonférentielle dans le barillet d'antivol (5), de sorte que le barillet d'antivol (5) est confiné dans la direction axiale par la bride de blocage (13).

7. Antivol en forme d'anneau (1) selon la revendication 6, comprenant :
un évidement de blocage (14) qui est inclus de manière solidaire dans le boîtier d'antivol (2) et qui est agencé de sorte que la came excentrique (7) s'étend dans l'évidement de blocage (14) lorsque le barillet d'antivol (5) a été forcé d'une position d'utilisation normale fermée dans une position déplacée axialement vers l'intérieur, moyennant quoi la came excentrique (7) s'étendant dans l'évidement de blocage (14) est fixe et bloque la plaque de verrouillage (8) qui est en mise en prise avec ce dernier, de sorte que la plaque de verrouillage (8) ne peut plus passer de l'état verrouillé à l'état déverrouillé.

8. Antivol en forme d'anneau (1) selon la revendication 6 ou 7, dans lequel le barillet d'antivol (5) comprend une première et une seconde partie, alors que le barillet d'antivol (5) est prévu avec une seconde rainure circonférentielle (15) qui est positionnée entre ladite première et ladite seconde partie du barillet d'antivol (5), et la seconde rainure circonférentielle (15) forme une seconde protection de rupture, qui se casse après avoir exercé une force axiale sur le barillet d'antivol (5) supérieure à une valeur de seuil particulière.

9. Antivol en forme d'anneau (1) selon l'une quelconque des revendications 2 à 8, comprenant :
un câble ou une chaîne comprenant une goupille de câble avec une rainure circonférentielle de goupille de câble ;
une ouverture de goupille de câble (16) qui est prévue dans le boîtier d'antivol (2) et qui s'étend dans la direction d'un axe d'ouverture de goupille de câble, dans lequel la goupille de câble peut être reçue ;
un élément de fixation (17) qui est agencé de manière mobile dans le boîtier d'antivol (2) et qui est en mise en prise avec la plaque de verrouillage (8) ou la came excentrique (7) et qui peut être amené dans une position de verrouillage dans laquelle l'élément de fixation (17) s'étend au moins partiellement dans l'ouverture de goupille de câble (16) dans un plan s'étendant sensiblement perpendiculairement à l'axe d'ouverture de goupille de câble et dans la position de verrouillage, est en mise en prise avec la rainure circonférentielle de goupille de câble d'une goupille de câble introduite dans l'ouverture de goupille de câble (16), l'élément de fixation (17) étant mobile, par le biais de la rotation du barillet d'antivol (5), dans une position de déverrouillage dans laquelle il a été amené hors de mise en prise avec la rainure circonférentielle de goupille de câble.

10. Antivol en forme d'anneau (1) selon la revendication 9, comprenant :
une cavité de réception d'élément de fixation (18) formée dans le boîtier d'antivol (2) ;
un arbre d'élément de fixation (19) qui fait partie intégrante du boîtier d'antivol (2) et est inclus dans la cavité de réception d'élément de fixation (18), l'arbre d'élément de fixation (19) ayant un axe qui est en angle droit par rapport à l'axe d'ouverture de goupille de câble ;
une ouverture d'alimentation de cavité de réception d'élément de fixation qui fournit l'accès à la cavité de réception d'élément de fixation (18) et via laquelle ouverture d'alimentation de cavité de réception d'élément de fixation, l'élément de fixation peut être placé dans la cavité de réception d'élément de fixation (18), alors que dans une condition assemblée de l'antivol en forme d'anneau (1), l'élément de fixation (17) est monté par palier sur l'arbre d'élément de fixation (19), l'élément de fixation (17) étant confiné par des pattes de capuchon de recouvrement (10b) du capuchon de recouvrement (10) s'étendant sur les côtés opposés du boîtier d'antivol (2).

11. Procédé pour assembler un antivol en forme d'anneau (1) selon l'une quelconque des revendications 3 à 10, comprenant au moins les étapes suivantes consistant à :
prévoir un boîtier d'antivol (2) qui comprend une pièce moulée unique et qui est prévu avec un canal de verrou en forme d'anneau (4) s'étendant le long d'un axe en forme de segment circulaire dans un plan XZ d'un système de coordonnées orthogonales XYZ définissant une direction X, une direction Y et une direction Z, le canal de verrou en forme d'anneau (4) étant délimité par des parois de canal de verrou en forme d'anneau (2a) faisant partie intégrante de la pièce moulée ;
prévoir un verrou en forme d'anneau (3) ayant une configuration sensiblement en forme de segment circulaire ;
prévoir un mécanisme d'antivol comprenant un barillet d'antivol (5) et une plaque de verrouillage (8), le barillet d'antivol (5) ayant un axe de barillet d'antivol s'étendant dans la direction X du système de coordonnées XYZ, le barillet d'antivol (5) étant prévu avec une came excentrique (7) qui est disposée de manière excentrique par rapport à l'axe de barillet d'antivol ;
faire coulisser le verrou en forme d'anneau (3) dans le canal de verrou en forme d'anneau (5) le long de l'axe en forme de segment circulaire du canal de verrou en forme d'anneau (4), de sorte que le verrou en forme d'anneau (3) est enfermé par les parois de canal de verrou en forme d'anneau (2a), le verrou en forme d'anneau (3) pouvant être amené dans une position fermée et une position ouverte ;
introduire la plaque de verrouillage (8) parallèle à la direction Y dans une cavité de réception de plaque de verrouillage (9) prévue dans le boîtier d'antivol (2) ;
introduire le barillet d'antivol (5) parallèle à la direction X dans le boîtier d'antivol (2), de sorte que le barillet d'antivol (5) met en prise la plaque de verrouillage (8) et le verrou en forme d'anneau (3), dans la position fermée, est verrouillé par la plaque de verrouillage (8) et par le biais de la rotation du barillet d'antivol (5), est libéré pour être amené dans la position ouverte.

12. Procédé selon la revendication 11, dans lequel le boîtier d'antivol (2) est prévu avec une ouverture de goupille de câble (16), dans lequel le procédé comprend les étapes consistant à :
prévoir un élément de fixation (17) qui, dans une position fermée de l'antivol en forme d'anneau (1), est en mise en prise avec une goupille de câble agencée dans l'ouverture de goupille de câble (16) pour verrouiller la goupille de câble dans l'ouverture de goupille de câble (16) ;
introduire l'élément de fixation (17) parallèle à une direction Y via une ouverture d'alimentation de cavité de réception d'élément de fixation dans une cavité de réception d'élément de fixation (18) qui fait partie intégrante du boîtier d'antivol (2), de sorte que l'élément de fixation (17) est agencé de manière mobile dans le boîtier d'antivol (2).

13. Procédé selon l'une des revendications 11 ou 12, dans lequel le procédé comprend les étapes consistant à :
prévoir un capuchon de recouvrement (10) qui a une configuration sensiblement en forme de U avec un corps de capuchon de recouvrement (10a) et deux pattes de capuchon de recouvrement (10b) s'étendant à partir du corps de capuchon de recouvrement (10a) ;
placer le capuchon de recouvrement (10) dans la direction Z sur le boîtier d'antivol (2), de sorte que les pattes de capuchon de recouvrement (10b) s'étendent sur les côtés opposés du boîtier d'antivol (2), moyennant quoi le capuchon de recouvrement (10) recouvre l'ouverture d'alimentation de cavité de réception de plaque de verrouillage de sorte que la plaque de verrouillage (8) est confinée dans la cavité de réception de plaque de verrouillage (9).

14. Procédé selon la revendication 13, lorsqu'elle dépend de la revendication 12, dans lequel, par le biais de la mise en place du capuchon de recouvrement (10), au moins l'une des pattes de capuchon de recouvrement (10b) recouvre l'ouverture d'alimentation de cavité de réception d'élément de fixation, de sorte que l'élément de fixation (17) est confiné dans la cavité de réception d'élément de fixation (18).
